(19) **Europäisches Patentamt / European Patent Office / Office européen des brevets**

(11) **EP 1 894 307 B1**

(12) **EUROPEAN PATENT SPECIFICATION**

(45) Date of publication and mention
of the grant of the patent:
**17.12.2008 Bulletin 2008/51**

(51) Int Cl.:
*H04B 1/10* (2006.01)   *H04B 1/26* (2006.01)

(21) Application number: **06710153.5**

(22) Date of filing: **06.02.2006**

(86) International application number:
**PCT/GB2006/050029**

(87) International publication number:
**WO 2006/085116 (17.08.2006 Gazette 2006/33)**

(54) **IMPROVEMENTS RELATING TO CHANNEL FILTERING IN RADIO COMMUNICATIONS SYSTEMS**

VERBESSERUNGEN IN BEZUG AUF DIE KANALFILTERUNG IN
FUNKKOMMUNIKATIONSSYSTEMEN

AMÉLIORATIONS PORTANT SUR LE FILTRAGE DES CANAUX DANS LES SYSTÈMES DE
RADIOCOMMUNICATION

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **09.02.2005 EP 05250744
09.02.2005 GB 0502648**

(43) Date of publication of application:
**05.03.2008 Bulletin 2008/10**

(73) Proprietor: **Astrium Limited
Stevenage
Hertfordshire SG1 2AS (GB)**

(72) Inventor: **Cobb, Gary Raymond
EADS Astrium Limited
Portsmouth Hampshire PO3 5PU (GB)**

(74) Representative: **BAE SYSTEMS plc
Group IP Department
Lancaster House
P.O. Box 87
Farnborough Aerospace Centre
Farnborough, Hampshire GU14 6YU (GB)**

(56) References cited:
**EP-A- 1 126 600        US-A- 2 998 517
US-A- 4 262 361        US-A- 5 300 838**

## Description

The invention relates to methods of defining channel bandwidths using electrical filter networks, in radio communication systems. In particular, the invention relates to circuit configurations that provide functional agility in terms of variable bandwidth and centre frequency in such systems.

In radio communications systems, frequency conversion techniques using heterodyne mixing or signal multiplication are well known. In the case of a receiver, these techniques allow translation of a selected input frequency band to another more convenient band where signal processing, such as demultiplexing, amplifying, limiting and other necessary functions may take place. Similarly, in the case of a transmitter, translation is often required from the frequency band where signal generation and processing (amplification, limiting, multiplexing etc) has taken place to a selected frequency band for transmission. In both these types of frequency conversion, the mixing process involves the generation of a local reference frequency oscillator signal that determines and facilitates the desired frequency translation.

Up-conversion and down-conversion are generic terms used in relation to frequency-mixing schemes, depending on whether the sum or difference frequencies are selected after signal multiplication. These terms are independent of the context of use within receivers and/or transmitters and indeed, multiple conversions, both up and down may be required in relay or transponder equipment that incorporate receiving, signal processing and transmitting stages.

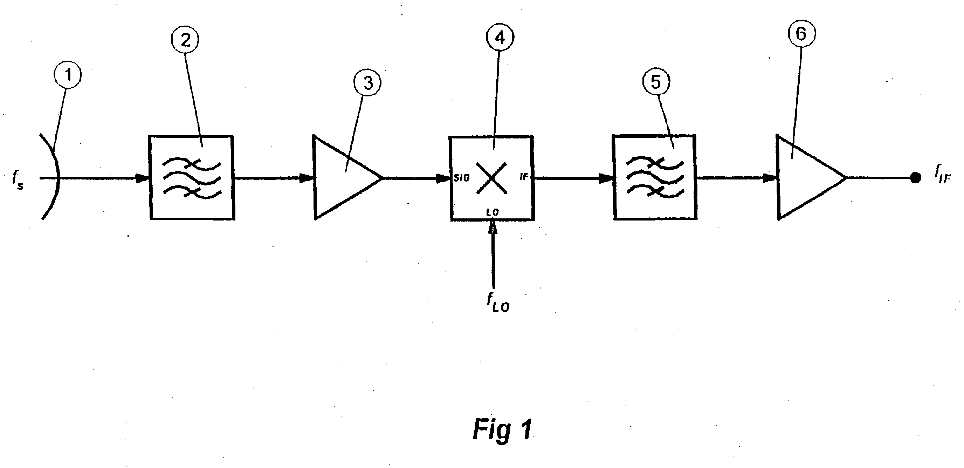

A typical heterodyne, down-converting receiver will be described with reference to Fig 1. An input signal $f_S$ is intercepted by a receiving antenna 1 and is fed through an input band-pass filter 2 to a low-noise signal amplifier 3, the output of which is applied to an input terminal of a heterodyne mixer 4. A local reference frequency oscillator signal $f_{LO}$ is also fed to the heterodyne mixer 4 so as to produce the desired sum or difference frequency $f_{IF}$ at the mixer output terminal. This signal is subsequently fed through a band-pass filter 5 and an amplifier 6 so as to produce an output signal of sufficient amplitude to be further processed by conventional analogue or digital signal processing means. The input band-pass filter 2 is generally known as an image response suppression filter whilst the output band-pass filter 5 is often termed a channel definition filter. This simple circuit arrangement is also suitable for up-conversion since the sum frequencies are also produced but this will not be described in the present context.

The characteristics of output band pass filter 5 are selected so as to define the difference frequency mode of operation. Because the local reference frequency oscillator is not synchronised to the incoming input signal, one of the known problems with this arrangement is that the output signal frequency is determined by the relationship

$$f_{IF} = \pm(f_{LO} - f_S)$$

This equation indicates that there is no discrimination between positive and negative frequencies in the heterodyne mixing process and that the system will respond to two signal frequencies, the desired input frequency and the image frequency, as specified by

$$f_S = f_{LO} \pm f_{IF}$$

This problem can be readily overcome by dimensioning filter 2 so that the desired input frequency band is passed and the image frequency band is rejected. The input frequency band, in the context of a down-converter, usually contains a plurality of signals, some of which will be for intended reception whilst others will be considered as interference. In the limit, the entire input frequency band could be fully channelized with a cluster of signals, each pitched at a frequency just exceeding the information bandwidth required to produce an acceptable bit error rate within the communications system as a whole. Under these conditions, filter 5 should possess channel defining properties so as to prevent an increase in the error rate due to adjacent channel interference. This means that output filter 5 should have good adjacent channel rejection (shape factor) and, at the same time, a flat, low ripple, pass-band so as preserve the fidelity of the selected signal.

This simple down-conversion technique has certain degrees of freedom. For example, if the local reference frequency oscillator is changed in exact channel pitch steps, different signal channels can be selected, down converted and processed as desired. Similarly, if a predetermined number of down-converters are provided, each being fed with a different local reference frequency oscillator signal at the same time, then simultaneous signal processing is possible.

Recently, the requirement for channel filters possessing good shape factors has led to the incorporation of Surface Acoustic Wave (SAW) Filter technology. Whilst these appear to provide an ideal solution, particularly when large numbers of channels are spaced in a near contiguous manner, the costs involved can be prohibitive. In addition, although SAW filters are theoretically regarded as volumetrically efficient because of their small physical size, they typically exhibit high insertion losses (20-30dB) and poor terminal impedance characteristics. Therefore, a significant additional volume is usually necessary to house both the amplification needed to recover the signal due the filter's high pass-band loss and the additional impedance matching elements that are necessary to maintain pass-band flatness.

Furthermore, the high loss feature of SAW filters significantly reduces the potential signal to noise ratio and hence the dynamic range prior to filtering. This increases demand on low-noise input amplification for the down-converters and antenna gain, both of which add to the requirement for power consumption and physical mass. This is a particular problem in communications satellites where power consumption and mass reserves are at a premium.

It is further noted that the range of bandwidths and shape factors available for SAW filter devices are somewhat limited, especially when using more stable substrate materials, such as, for example, Quartz (SiO) and Lithium Tantalate (LiTaO$_3$). A step in bandwidth is often accompanied by a change of centre frequency, so that changing the channel bandwidth is not just as simple as switching in an alternative wider or narrower filter. These limitations and restrictions severely curtail the in-flight agility and flexibility of multi-channel satellite communication transponder equipment, where in-flight channel reconfiguration is highly desirable. Utilisation of channel filters with continuously variable bandwidths and centre frequencies can provide a solution to in-flight reconfigurability.

Continuously variable bandwidth filtering is known in the prior art. For example. US Pat. No. 2,998,517, US Pat. No. 4,228,401 and CA Pat. No. 2,256,330 all describe a filtering technique wherein a pair of fixed frequency, highly selective band-pass filters with differing centre frequencies are used, the response of each individual filter being made to overlap so as to create a composite response that possesses a bandwidth that is less than, or equal to, the narrowest of the individual filters.

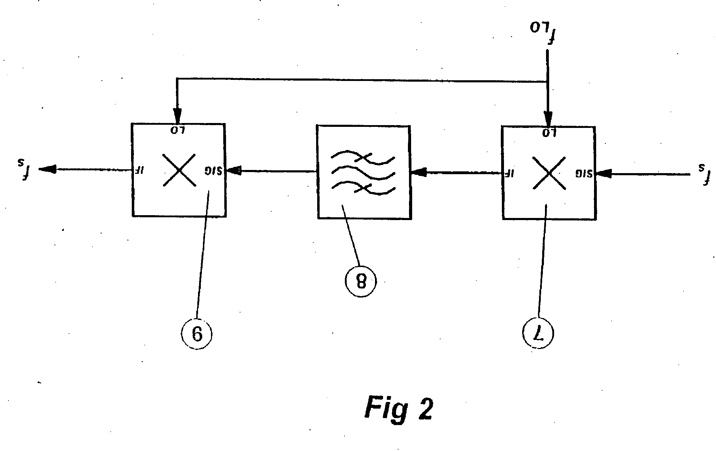

This technique, known as intermediate frequency (IF) shift, will be described in more detail with reference to Figures 2 to 4. As described above with reference to Fig 1, the signal frequency fs is fed into the signal terminal of a first heterodyne mixer 7 and, at the same time, a local reference frequency oscillator signal $f_{LO}$ is fed into the LO terminal. The signal produced at output IF terminal comprises the sum and difference frequency components $fs + f_{LO}$ and $fs - f_{LO}$. The output signal of mixer 7 is passed through band-pass filter 8, the selected sum or difference signal being subsequently fed into the input signal terminal of a second heterodyne mixer 9. The LO terminal of this second mixer 9 is fed with the same local reference frequency oscillator signal $f_{LO}$, as previously fed to mixer 7. Hence, the output IF terminal of the second heterodyne mixer 9 produces a single frequency component identical to fs.

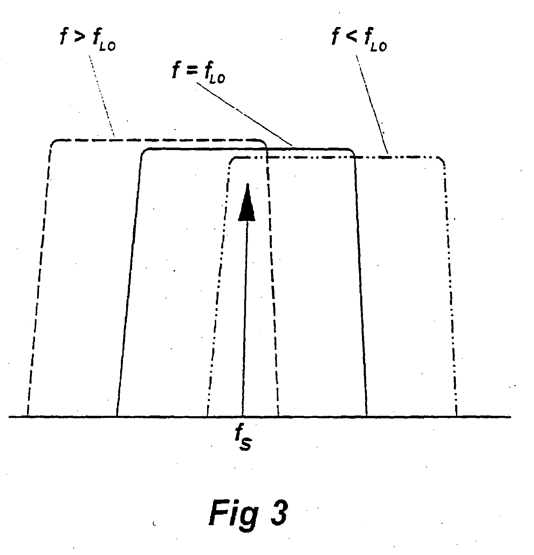

Fig 3 demonstrates the tunability of the overall band-pass filter response centre frequency around the input signal frequency fs. It is clear that if the local reference frequency oscillator signal $f_{LO}$ is changed, the frequency component of the output signal will not be changed. However, because the sum or difference signal from the first heterodyne mixer 7 is spectrally shifted with respect to the frequency response of fixed band-pass filter 8, the output signal amplitude will follow the response of the filter and the local reference frequency oscillator signal $f_{LO}$.

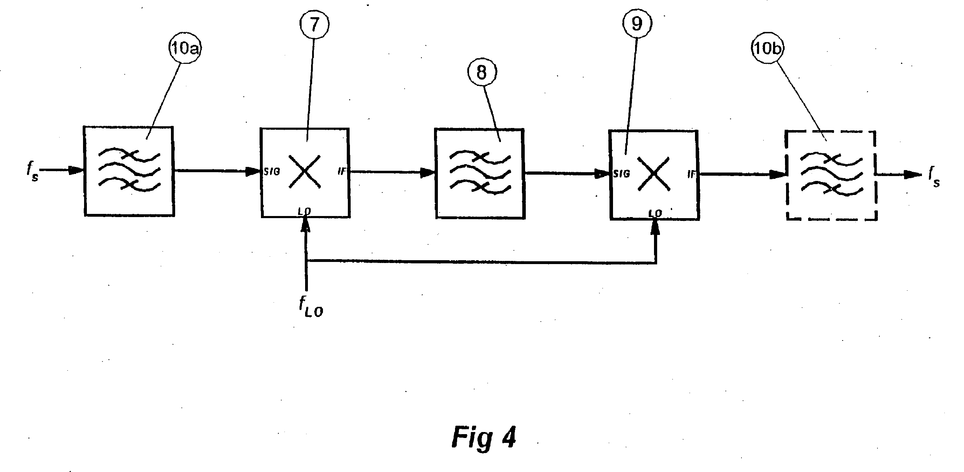

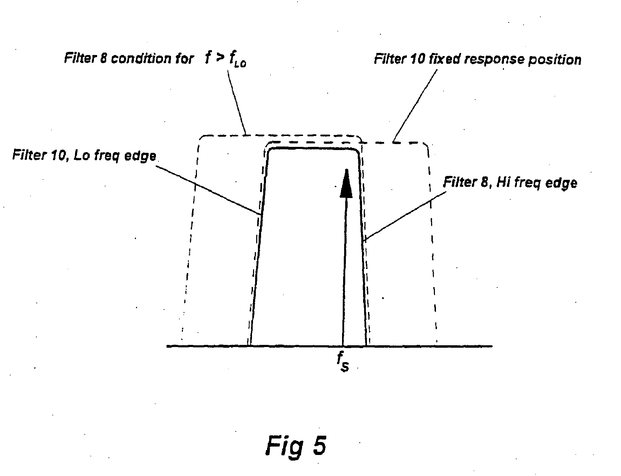

Referring to Figures 4 and 5, if a fixed frequency band-pass filter 10a or 10b, with a similar bandwidth characteristic to filter 8 but centred on the input frequency band fs, is added to either the signal terminal input of heterodyne mixer 7 or to the IF output terminal of heterodyne mixer 9, the frequency response of both band-pass filters 8 and 10 conceptually overlap. Further, as a consequence of the IF shift technique previously described, the response of filter 8 can be made to shift, relative to the fixed frequency response of filter 10, corresponding to any change of the local reference frequency oscillator signal $f_{LO}$. In this case, the degree of overlap of the two filter responses will be different providing a composite band-pass frequency response that varies in bandwidth. If an additional heterodyne mixer with its own independent local reference frequency oscillator signal is provided at either the input or output of such a variable bandwidth filter, up and/or down conversion to and from an external communications link frequency band is possible. By varying this new local reference oscillator signal frequency, the variable bandwidth filter may be provided with a selected degree of frequency agility.

However, there are certain deficiencies associated with such a continuously variable bandwidth band-pass filter. As illustrated in Fig 5, for composite bandwidths of less than the narrowest of the individual band-pass filter responses, the rate of change of attenuation over the pass-band to stop-band transition at each side of the overall band-pass response, is determined by only one band edge from each of the individual fixed frequency band-pass filters. This is true in both directions of shift in the local reference frequency oscillator signal $f_{LO}$ and, as a consequence, alternative band edge transitions, for each of the individual fixed frequency band-pass filters do not contribute, for the most part, to the overall composite band-pass response. This represents inefficient use of the capacity of the filter components.

US 4,262,361 describes a more efficient method of achieving variable bandwidth filtering. Here, the individual band pass filters are replaced by filter networks that realise only a low-pass response and a high-pass response.

However, it is indicated that the additional mixers required in order to convert the frequency of the signal between RF and IF frequencies contribute to undesirable out-of-band spurious responses. In addition, the rate of change of attenuation over the pass-band to stop-band transition for the filter networks is often significantly poorer than when utilizing band-pass filters with bandwidths specifically selected for the required communications channel definition. This is particularly true if the proposed channel base-band signal bandwidth does not extend down to zero frequency which means that if full use of the low-pass filter's bandwidth is not intended, the rate of change of attenuation over the pass-band to stop-band transition is not optimal for one edge of the composite band-pass channel. The pass-band to stop-band transition could be improved by increasing the order of the filter network that is used to realise the low-pass function but implementation requires an increased number of components which increases costs and introduces to further inefficiencies.

EP1126600 describes a continuously variable bandwidth filter according to the preamble of claim 1.

It is an object of the present invention to alleviate the various deficiencies discussed above.

It is a further object of the present invention to provide a significantly more efficient variable bandwidth channel filter capable of providing highly selective composite band-pass filter responses.

From a first aspect, the invention resides in a continuously variable bandwidth filter comprising, frequency conversion means, local oscillator means adapted to control the frequency conversion means, a first filter network and a second filter network means, the first and second filter networks having the same bandwidth and the output of the first filter network being coupled to input of the second filter network by means of the frequency conversion means, characterised in that the first and second filter networks exhibit a generalised Chebyshev transfer function.

In one embodiment, the first and second filter networks may be exhibit pseudo-high-pass and pseudo-low-pass filter characteristics respectively.

Although the slope of the alternate band edge transitions in each of the pseudo-low-pass and pseudo-high-pass responses is extremely poor, these do not contribute significantly to the overall composite band-pass response. This is much more efficient than the use of conventional band-pass filters described above because the increased slope of the alternate band edge transitions is not wasted. In addition, spurious elimination problems associated with the use of additional mixers in a pure low-pass/high-pass configuration of a continuously variable bandwidth circuit is alleviated.

In an alternative, particularly efficient embodiment, where maximum utilisation of the entire base-band channel down to zero frequency is desired, the pseudo-low-pass filter may be replaced by a filter exhibiting an elliptic low pass characteristic.

The frequency response overlap of the first and second filter networks preferably produces a composite band-pass filter that is determined only by the steep band edge transition region of the individual filter networks. This is advantageous in that the individual filter pass-bands will be fully utilised and the single sided band edge transition slope is for a given number of components is optimised. This eliminates the requirement to increase the number of circuit components in order to achieve the desired selectivity.

In one embodiment, the maximum pass-band of the first and second filter networks may be selected to precisely fit the maximum band-pass bandwidth required by in a channelised radio communications system.

The frequency conversion means is preferably a hetrodyne mixer. Further frequency converters with suitable characteristics may be provided at the input terminal of the first filter network or at output terminal of the second filter network for the purpose of up or down conversion to and from an external communications link frequency band

From a further aspect, the invention resides in a satellite communications system including a plurality of the above described continuously variable bandwidth filters.

## Brief description of Drawings

Figure 1 is a schematic diagram of a typical heterodyne receiver apparatus;

Figure 2 is a schematic diagram of an intermediate frequency (IF) shift circuit;

Figure 3 illustrates the filter response of the circuit of Figure 2 on varying the frequency of local reference frequency oscillator with respect to the input/output signal frequency;

Figure 4 is a schematic diagram of an intermediate frequency (IF) shift circuit providing variable bandwidth operation;

Figure 5 illustrates the conceptual response overlap of the circuit of Figure 4 exhibiting variable bandwidth operation using conventional band-pass filters;

Figure 6 illustrates a typical pseudo-high-pass filter response created by the application of Generalised Chebyshev Prototype synthesis;

Figure 7 shows a typical pseudo-low-pass filter response created by the application of Generalised Chebyshev Prototype synthesis;

Figure 8 is a schematic diagram of a variable bandwidth filter implemented according to an embodiment of the present invention; and

Figure 9 shows the conceptual filter response of the filter of Figure 8.

## Detailed description of Invention

The present invention is implemented using pseudo-high-pass and pseudo-low-pass filter networks as determined by the application of the Generalised Chebyshev Prototype functional synthesis.

For some time, it has been generally accepted that elliptic filter transfer functions possess the optimum response in terms of selectivity, as a solution to the approximation problem, particularly for highly selective band-pass filters - see Theory and Design of Microwave Filters, 2001, IEE, pp 64-68. Elliptic filters are a sub-class of the Generalised Chebyshev Prototype function and provide for a well behaved pass-band, within some arbitrarily chosen equi-ripple amplitude performance, together with a similarly well behaved stop-band, within some other independently chosen equi-ripple amplitude performance. The selectivity of such functions is determined by a complex relationship between the filter order (number of poles and zeros) and the independently chosen pass-band and stop-band ripple amplitudes. However, once the filter's order and ripple amplitudes have been chosen, the spectral distribution of both transmission poles and zeros are fixed in a symmetrical fashion. Therefore, although these response types are optimised in terms of selectivity, they are not considered to be the most efficient because the spectral positions of many of the stop-band zeros will not significantly affect the pass-band response selectivity.

A Generalized Chebyshev Prototype approximation function produces a well behaved pass-band response, within some arbitrarily chosen equi-ripple amplitude performance and stop-band ripples which may be constrained by some arbitrarily chosen amplitude performance (not necessarily equi-ripple), together with an arbitrarily chosen number and spectral distribution of stop-band transmission zeros. The selectivity of such functions is determined by a complex relationship between the number of poles and the number and spectral distribution of the independently chosen stop-band transmission zeros. On selection of the order of the filter, the pass-band ripple amplitude and the number and spectral position of the stop-band transmission zeros, the spectral distribution of transmission poles is fixed in typically, an asymmetrical fashion. In other words, there are no constraints on spectral symmetry of either poles or zeros. As a consequence, it is possible to produce an arbitrarily asymmetric band-pass function, where this type of response is considered both optimum and efficient because only the minimum number of transmission zeros, with arbitrarily chosen spectral positions may be selected to meet a specific performance requirement. The generalised nature of the function includes the ability to position two or more transmission zeros to be spectrally coincident.

Because of the flexibility offered by the Generalised Chebyshev Prototype class of functions, it should be clear that it is always possible to generate a function of this type that exactly matches the elliptic class of functions. Hence the circuit complexity necessary to realise this function in an electrical context will be exactly the same. This is termed the degenerate case.

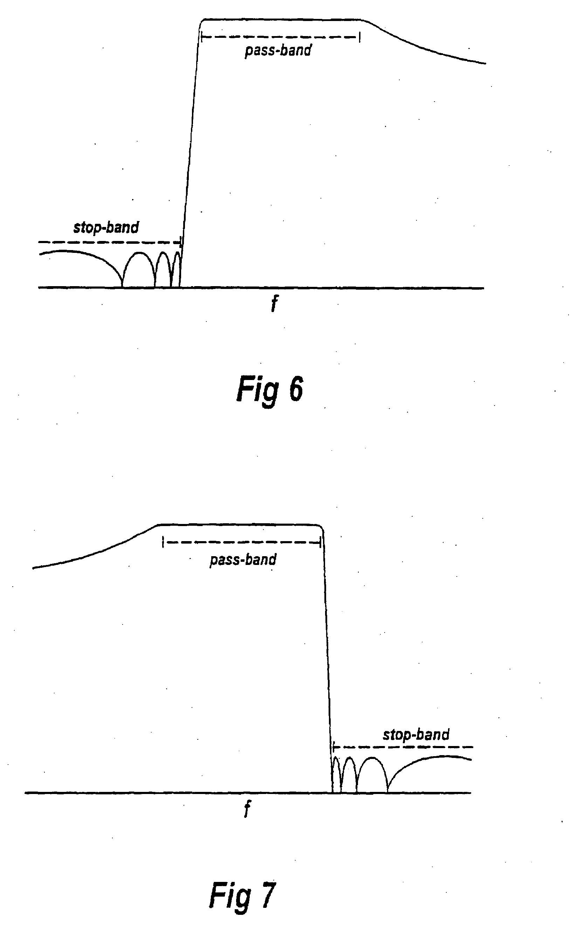

An example of the Generalised Chebyshev Prototype approach is shown in Fig 6 which demonstrates a five pole response with four finite frequency transmission zeros all positioned below the equi-ripple pass-band so as to provide an equi-ripple 50dB stop-band extending down to, but not restricted to, zero frequency. It has been determined in this case, that the attenuation slope of the low-frequency transition region between the equi-ripple pass-band edge and the 50dB stop-band edge is the same as for an eight pole elliptic response with the same number of finite frequency zeros symmetrically disposed about the pass-band centre frequency. Moreover, the effectively increased low-frequency transition region slope provided by the Generalised Chebyshev Prototype function, is achieved at the expense of the high-frequency transition region attenuation slope that is significantly worse than the equivalent eight pole symmetric response. In many cases, where the attenuation slope on the high side of the defined pass-band is of no interest, this is a distinct advantage as there is no redundancy of transmission zeros where they are not needed.

The response so described is termed a pseudo-high-pass filter, as the high frequency transition slope is generally quite poor as compared with the sharp low-frequency transition slope, in contrast to conventional high-pass filters. At the same time, the equi-ripple pass-band region is well behaved with the transmission poles only asymmetrically distributed in the spectral sense.

A further example of the Generalised Chebyshev Prototype approach is shown in Fig 7 which demonstrates a five pole response with four finite frequency transmission zeros all positioned above the equi-ripple pass-band so as to provide an equi-ripple 50dB stop-band extending up to, but not restricted to, infinite frequency. It has been determined, in this case, that the attenuation slope of the high-frequency transition region between the equi-ripple pass-band edge and the 50dB stop-band edge is the same as for an eight pole elliptic response with the same number of finite frequency zeros symmetrically disposed about the pass-band centre frequency. It is further observed that this effectively increased high-frequency transition region slope, provided by the Generalised Chebyshev Prototype function, is achieved at the expense of the low-frequency transition region slope that is significantly worse than the equivalent eight pole symmetric response. In many cases when the attenuation slope on the low side of the defined pass-band is of no interest, this is a distinct advantage ad there is no redundancy of transmission zeros where they are not needed.

The response, so described, is termed a pseudo-low-pass filter, as the low frequency transition slope is generally quite poor as compared with the sharp high-frequency transition attenuation slope, in contrast to conventional low-pass filters. At the same time, the equi-ripple pass-band region is well behaved with the poles only asymmetrically distributed in the spectral sense.

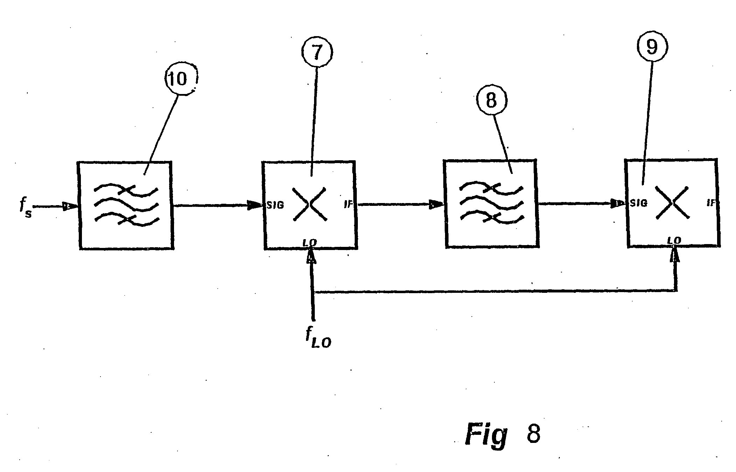

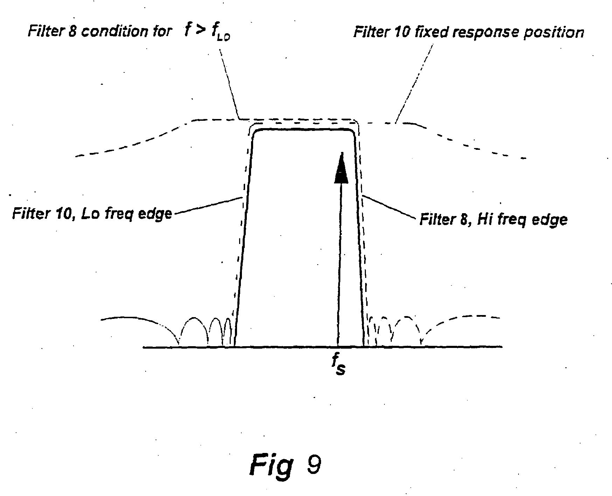

A variable bandwidth filter constructed according to an embodiment of the present invention will now be described with reference to Figure 9. The output signal from a pseudo-high pass filter 10 centred on the input frequency band $f_s$ is fed to the signal terminal input of heterodyne mixer 7. The output signal from mixer 7 is fed to a pseudo low pass filter 8 with similar bandwidth characteristics to pseudo-high-pass filter 10. The output signal from pseudo low pass filter 8 is fed to a second heterodyne mixer 9, both mixers 7 and 9 being fed with the same local reference frequency oscillator signal $f_{LO}$ respectively. The effective frequency response overlap of pseudo high pass and low pass filters 8 and 10 produces a composite band-pass filter response as shown in Fig 8. As can be seen, the overall response is highly selective by nature and is determined only by the steep band edge transition region of the individual filter networks.

Although the slope of the alternate band edge transitions in each of the pseudo-low-pass and pseudo-high-pass responses is extremely poor, these do not contribute significantly to the overall composite band-pass response. This is much more efficient than the use of conventional band-pass filters described above because the increased slope of the alternate band edge transitions is not wasted. In addition, spurious elimination problems associated with the use of additional mixers in the pure low-pass/high-pass configuration of the continuously variable bandwidth circuit of Fig 4 is alleviated because, although the alternate band edge transition slope for the pseudo-low-pass and pseudo-high-pass case is poor, it is nevertheless monotonic in nature. Therefore, at frequencies remote from the pass-band and on either side of the high slope band edge transitions, useful attenuation exists which is known to aid spurious elimination in up- and down-converter schemes.

The maximum pass-band of the pseudo-low-pass and pseudo-high-pass can be tailored to precisely fit the maximum band-pass bandwidth required by the channelised radio communications system. This is advantageous in that the individual filter pass-bands will be fully utilised and the single sided band edge transition slope is for a given number of components is optimised. This eliminates the requirement to increase the number of circuit components in order to achieve the desired selectivity.

Various other modifications to the invention are envisaged. For example, where maximum utilisation of the entire base-band channel down to zero frequency is desired, a conventional elliptic low-pass function, rather than a pseudo-low-pass function, may be used in combination with the pseudo-high-pass function because, under these circumstances, this arrangement would be considered the optimum and most efficient solution. This may necessarily be the case when the number and spectral positions of the desired transmission zeros correspond exactly to that that would be generated by an equally selective elliptic transfer function (i.e. the degenerate condition).

In summary, the number of components necessary to achieve any desired band-pass selectivity factor for a variable bandwidth channel filter using the IF shift method is significantly reduced in comparison to similar configurations using conventional band-pass filters. As a consequence, efficiency is improved and the overall response is optimised.

**Claims**

1. A continuously variable bandwidth filter comprising, frequency conversion means (7) local oscillator means adapted to control the frequency conversion means, a first filter network (10) and a second filter network means (8), the first and second filter networks having the same bandwidth and the output of the first filter network being coupled to input of the second filter network by means of the frequency conversion means, **characterised in that** the first and second filter networks exhibit a generalised Chebyshev transfer function.

2. A continuously variable bandwidth filter according to claim 1, **characterised in that** the second filter network exhibits a pseudo high pass characteristic.

3. A continuously variable bandwidth filter according to claim 2, **characterised in that** the first filter network exhibits a pseudo- high-pass characteristic.

4. A continuously variable bandwidth filter according to claim 2, **characterised in that** the first filter network exhibits an elliptic low pass characteristic.

5. A continuously variable bandwidth filter according to any preceding claim, wherein the frequency response overlap of the first and second filter networks produces a composite band-pass filter which is determined only by the steep band edge transition region of the individual filter networks.

6. A continuously variable bandwidth filter according to any preceding claim, wherein the maximum passband of the first and second filter networks is selected to precisely fit the maximum band-pass bandwidth required by in a channelised radio communications system.

7. A continuously variable bandwidth filter according to any preceding claim, wherein the frequency converting means comprises a heterodyne mixer (7).

8. A continuously variable bandwidth filter according to any preceding claim, further comprising a second frequency conversion means (9)for up or down conversion of the output signal of the second filter network (8) to a suitable frequency transmission band.

9. A continuously variable bandwidth filter according to any preceding claim, further comprising a second frequency conversion means for up or down conversion of the input signal to the first filter network to a suitable frequency transmission band.

10. A satellite communications system including a plurality of continuously variable bandwidth filters according to any preceding claim.

**Patentansprüche**

1. Ein Filter mit kontinuierlich variabler Bandbreite, der ein Frequenzumwandlungsmittel (7), ein Lokaloszillatormittel, das angepasst ist, um das Frequenzumwandlungsmittel zu steuern, eine erste Filterschaltung (10) und ein zweites Filterschaltungsmittel (8) beinhaltet, wobei die erste und die zweite Filterschaltung die gleiche Bandbreite aufweisen und der Ausgang der ersten Filterschaltung mittels des Frequenzumwandlungsmittels an den Eingang der zweiten Filterschaltung gekoppelt ist, **dadurch gekennzeichnet, dass** die erste und die zweite Filterschaltung eine verallgemeinerte Tschebyscheff-Transferfunktion vorweisen.

2. Filter mit kontinuierlich variabler Bandbreite gemäß Anspruch 1, **dadurch gekennzeichnet, dass** die zweite Filterschaltung eine Pseudo-Hochpasscharakteristik vorweist.

3. Filter mit kontinuierlich variabler Bandbreite gemäß Anspruch 2, **dadurch gekennzeichnet, dass** die erste Filterschaltung eine Pseudo-Hochpasscharakteristik vorweist.

4. Filter mit kontinuierlich variabler Bandbreite gemäß Anspruch 2, **dadurch gekennzeichnet, dass** die erste Filterschaltung eine elliptische Tiefpasscharakteristik vorweist.

5. Filter mit kontinuierlich variabler Bandbreite gemäß einem der vorhergehenden Ansprüche, wobei die Überlappung im Frequenzgang der ersten und der zweiten Filterschaltung einen komplexen Bandpassfilter produziert, der nur durch den Bereich des steilen Bandkantenübergangs der individuellen Filterschaltungen bestimmt wird.

6. Filter mit kontinuierlich variabler Bandbreite gemäß einem der vorhergehenden Ansprüche, wobei der maximale Durchlassbereich der ersten und der zweiten Filterschaltung ausgewählt wird, um der in einem Funkkommunikationssystem mit Kanalaufteilung erforderlichen maximalen Bandpass-Bandbreite genau zu entsprechen.

7. Filter mit kontinuierlich variabler Bandbreite gemäß einem der vorhergehenden Ansprüche, wobei das Frequenzumwandlungsmittel einen Heterodynmischer (7) beinhaltet.

8. Filter mit kontinuierlich variabler Bandbreite gemäß einem der vorhergehenden Ansprüche, der des Weiteren ein zweites Frequenzumwandlungsmittel (9) für die Auf- oder Abwärtsmischung des Ausgangssignals von der zweiten Filterschaltung (8) auf ein geeignetes Frequenzübertragungsband beinhaltet.

9. Filter mit kontinuierlich variabler Bandbreite gemäß einem der vorhergehenden Ansprüche, der des Weiteren ein zweites Frequenzumwandlungsmittel für die Auf- oder Abwärtsmischung des Eingangssignals an die erste Filterschaltung auf ein geeignetes Frequenzübertragungsband beinhaltet.

10. Ein Satellitenkommunikationssystem, das eine Vielzahl von Filtern mit kontinuierlich variabler Bandbreite gemäß einem der vorhergehenden Ansprüche umfasst.

**Revendications**

1. Un filtre à largeur de bande variable en continu comprenant un moyen de conversion de fréquence (7), un moyen formant oscillateur local adapté pour commander le moyen de conversion de fréquence, un moyen formant premier réseau de filtres (10) et un moyen formant deuxième réseau de filtres (8), les premier et deuxième réseaux de filtres ayant la même largeur de bande et la sortie du premier réseau de filtres étant couplée à l'entrée du deuxième réseau de filtres à l'aide du moyen de conversion de fréquence, **caractérisé en ce que** les premier et deuxième réseaux de filtres présentent une fonction de transfert de Chebyshev généralisée.

2. Un filtre à largeur de bande variable en continu selon la revendication 1, **caractérisé en ce que** le deuxième réseau de filtres présente une caractéristique pseudo passe-haut.

3. Un filtre à largeur de bande variable en continu selon la revendication 2, **caractérisé en ce que** le premier réseau de filtres présente une caractéristique pseudo passe-haut.

4. Un filtre à largeur de bande variable en continu selon la revendication 2, **caractérisé en ce que** le premier réseau de filtres présente une caractéristique passe-bas elliptique.

5. Un filtre à largeur de bande variable en continu selon n'importe quelle revendication précédente, dans lequel le recouvrement des réponses en fréquences des premier et deuxième réseaux de filtres produit un filtre passe-bande composite qui est déterminé uniquement par la région de transition d'extrémité de bande de fréquence raide des réseaux de filtres individuels.

6. Un filtre à largeur de bande variable en continu selon n'importe quelle revendication précédente, dans lequel la bande passante maximum des premier et deuxième réseaux de filtres est sélectionnée afin de correspondre précisément à la largeur de bande maximum du passe-bande requise par un système de radiocommunications à canaux.

7. Un filtre à largeur de bande variable en continu selon n'importe quelle revendication précédente, dans lequel le moyen de conversion de fréquence comprend un mélangeur hétérodyne (7).

8. Un filtre à largeur de bande variable en continu selon n'importe quelle revendication précédente, comprenant de plus un deuxième moyen de conversion de fréquence (9) pour convertir à la hausse ou à la baisse le signal de sortie du deuxième réseau de filtres (8) en une bande de transmission de fréquence adéquate.

9. Un filtre à largeur de bande variable en continu selon n'importe quelle revendication précédente, comprenant de plus un deuxième moyen de conversion de fréquence pour convertir à la hausse ou à la baisse le signal d'entrée dans le premier réseau de filtres en une bande de transmission de fréquence adéquate.

10. Un système de communication par satellite incluant une pluralité de filtres à largeur de bande variable en continu selon n'importe quelle revendication précédente.

$f_{IF}$

⑥

⑤

④

$f_{LO}$

③

②

①

$f_s$

*Fig 1*

$f_{LO}$

LO

IF  SIG

⑥

$f_s$

⑧

IF  SIG

LO

$f_{LO}$

$f_s$

⑦

**Fig 2**

EP 1 894 307 B1

*f* > *f*$_{LO}$      *f* < *f*$_{LO}$

*f* = *f*$_{LO}$

*f*$_S$

*Fig 3*

Fig 4

Filter 8 condition for $f > f_{Lo}$     Filter 10 fixed response position

Filter 10, Lo freq edge

Filter 8, Hi freq edge

$f_S$

## Fig 5

**Fig 6**

**Fig 7**

EP 1 894 307 B1

*Fig* 8

Filter 8 condition for $f > f_{LO}$     Filter 10 fixed response position

Filter 10, Lo freq edge     Filter 8, Hi freq edge

$f_S$

# Fig 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2998517 A
- US 4228401 A
- CA 2256330
- US 4262361 A
- EP 1126600 A

**Non-patent literature cited in the description**

- Theory and Design of Microwave Filters. *IEE,* 2001, 64-68